# EUROPEAN PATENT APPLICATION

(11) **EP 2 608 055 A1**
(43) Date of publication of application: **26.06.2013**
(21) Application number: 11195346.9
(22) Date of filing: 22.12.2011
(51) Int. Cl.: G06F 17/30

(54) **Methods, apparatus and non-transitory computer readable storage mediums**

(71) Applicant: Nokia Corporation, 02150 Espoo (FI)
(72) Inventor: Samuels, John, Tarelton, Lancashire PR4 6WF (GB)
(74) Representative: Swindell & Pearson Limited

(57) **Abstract**

A method comprising: receiving a user request including one or more object identifiers of an object database; determining if one or more stored images include one or more image portions corresponding to the one or more object identifiers; and controlling display of one or more of the stored images that include one or more image portions corresponding to the one or more object identifiers in the received user request.

## Description

### TECHNOLOGICAL FIELD

Embodiments of the present invention relate to methods, apparatus and non-transitory computer readable storage mediums. In particular, they relate to methods, apparatus and non-transitory computer readable storage mediums in a portable electronic device.

### BACKGROUND

Apparatus, such as portable electronic devices, usually include one or more memories for storing data such as image files. The capacity of such memories has increased in recent years and it is now possible to store a relatively large number of image files thereon. However, it may be difficult for a user to search a large number of image files on such an apparatus in order to find the image file or files that they desire.

It would therefore be desirable to provide an alternative apparatus.

### BRIEF SUMMARY

According to various, but not necessarily all, embodiments of the invention there is provided a method comprising: receiving a user request including one or more object identifiers of an object database; determining if one or more stored images include one or more image portions corresponding to the one or more object identifiers; and controlling display of one or more of the stored images that include one or more image portions corresponding to the one or more object identifiers in the received user request.

The object database may be a contact database and an object identifier may include contact information.

The object database may be a landmark database and an object identifier may include information relating to a landmark.

Determining if one or more stored images include one or more image portions corresponding to the one or more object identifiers, may include comparing one or more images associated with the object database with the one or more stored images to determine a correspondence there between.

The method may further comprise: receiving an image; identifying one or more image portions in the image; determining if the one or more identified image portions correspond, in whole or in part, to one or more images associated with the object database; and associating the identified one or more image portions with one or more object identifiers of the object database.

Determining if one or more stored images include one or more image portions corresponding to the one or more object identifiers, may include determining if any of the one or more stored images are associated with the one or more object identifiers in the user request.

The one or more image portions may include one or more human faces.

The one or more object identifiers may include audio information.

The one or more contact identifiers may include text information.

The received user request may include audio information identifying the one or more object identifiers.

The received request from the user may include text information identifying the one or more object identifiers.

According to various, but not necessarily all, embodiments of the invention there is provided an apparatus comprising: at least one processor; and at least one memory including computer program code; the at least one memory and the computer program code configured to, with the at least one processor, cause the apparatus at least to perform: receiving a user request including one or more object identifiers of an object database; determining if one or more stored images include one or more image portions corresponding to the one or more object identifiers; and controlling display of one or more of the stored images that include one or more image portions corresponding to the one or more object identifiers in the received user request.

The object database may be a contact database and an object identifier may include contact information.

The object database may be a landmark database and an object identifier may include information relating to a landmark.

Determining if one or more stored images include one or more image portions corresponding to the one or more object identifiers, may include comparing one or more images associated with the object database with the one or more stored images to determine a correspondence there between.

The at least one memory and the computer program code may be configured to, with the at least one processor, cause the apparatus at least to further perform: receiving an image; identifying one or more image portions in the image; determining if the one or more identified image portions correspond, in whole or in part, to one or more images associated with the object database; and associating the identified one or more image portions with one or more object identifiers of the object database.

Determining if one or more stored images include one or more image portions corresponding to the one or more object identifiers, may include determining if any of the one or more stored images are associated with the one or more object identifiers in the user request.

The one or more image portions may include one or more human faces.

The one or more object identifiers may include audio information.

The one or more contact identifiers may include text information.

The received user request may include audio information identifying the one or more object identifiers.

The received request from the user may include text information identifying the one or more object identifiers.

According to various, but not necessarily all, embodiments of the invention there is provided a non-transitory computer-readable storage medium encoded with instructions that, when performed by a processor, cause performance of: receiving a user request including one or more object identifiers of an object database; determining if one or more stored images include one or more image portions corresponding to the one or more object identifiers; and controlling display of one or more of the stored images that include one or more image portions corresponding to the one or more object identifiers in the received user request.

The object database may be a contact database and an object identifier may include contact information.

The object database may be a landmark database and an object identifier may include information relating to a landmark.

Determining if one or more stored images include one or more image portions corresponding to the one or more object identifiers, may include comparing one or more images associated with the object database with the one or more stored images to determine a correspondence there between.

The non-transitory computer-readable storage medium may be encoded with instructions that, when performed by a processor, cause performance of: receiving an image; identifying one or more image portions in the image; determining if the one or more identified image portions correspond, in whole or in part, to one or more images associated with the object database; and associating the identified one or more image portions with one or more object identifiers of the object database.

Determining if one or more stored images include one or more image portions corresponding to the one or more object identifiers, may include determining if any of the one or more stored images are associated with the one or more object identifiers in the user request.

The one or more image portions may include one or more human faces.

The one or more object identifiers may include audio information.

The one or more contact identifiers may include text information.

The received user request may include audio information identifying the one or more object identifiers.

The received request from the user may include text information identifying the one or more object identifiers.

According to various, but not necessarily all, embodiments of the invention there is provided a computer program that, when run on a computer, performs the method as described in any of the preceding paragraphs.

According to various, but not necessarily all, embodiments of the invention there is provided an apparatus comprising: means for receiving a user request including one or more object identifiers of an object database; means for determining if one or more stored images include one or more image portions corresponding to the one or more object identifiers; and means for controlling display of one or more of the stored images that include one or more image portions corresponding to the one or more object identifiers in the received user request.

### BRIEF DESCRIPTION

For a better understanding of various examples of embodiments of the present invention reference will now be made by way of example only to the accompanying drawings in which:
Fig. 1 illustrates a schematic diagram of an apparatus according to various embodiments;
Fig. 2 illustrates a view of a display displaying a plurality of object identifiers in an object database;
Fig. 3 illustrates a view of a display displaying an image;
Fig. 4 illustrates a flow diagram of a method according to various embodiments of the invention; and
Fig. 5 illustrates a flow diagram of another method according to various embodiments of the invention.

### DETAILED DESCRIPTION

In the following description, the wording 'connect' and 'couple' and their derivatives mean operationally connected or coupled. It should be appreciated that any number or combination of intervening components can exist (including no intervening components).

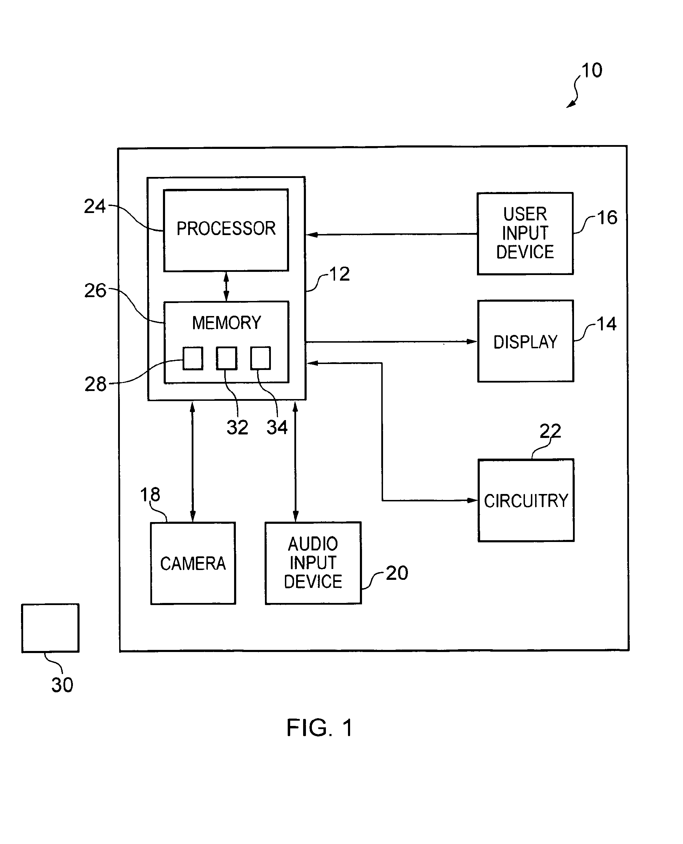

Fig. 1 illustrates a schematic diagram of an apparatus 10 according to various embodiments of the invention. The apparatus 10 includes a controller 12, a display 14, a user input device 16, a camera 18, an audio output device 20 and circuitry 22.

The apparatus 10 may be any electronic device and may be a hand portable electronic communication device (for example, a mobile cellular telephone, a tablet computer, a laptop computer, a personal digital assistant or a hand held computer), a non-portable electronic device (for example, a personal computer or a server), a portable multimedia device (for example, a music player, a video player, a game console and so on) or a module for such devices. As used here, 'module' refers to a unit or apparatus that excludes certain parts or components that would be added by an end manufacturer or a user. For example, where the apparatus 10 is a module, the apparatus 10 may only include the controller 12 in some embodiments.

The implementation of the controller 12 can be in hardware alone (for example, a circuit, a processor and so on), have certain aspects in software including firmware alone or can be a combination of hardware and software (including firmware).

The controller 12 may be implemented using instructions that enable hardware functionality, for example, by using executable computer program instructions in a general-purpose or special-purpose processor that may be stored on a computer readable storage medium (disk, memory and so on) to be executed by such a processor.

In various embodiments, the controller 12 includes one or more processors 24 and one or more memories 26. The processor 24 is configured to read from and write to the memory 26. The processor 24 may also comprise an output interface via which data and/or commands are output by the processor 24 and an input interface via which data and/or commands are input to the processor 24.

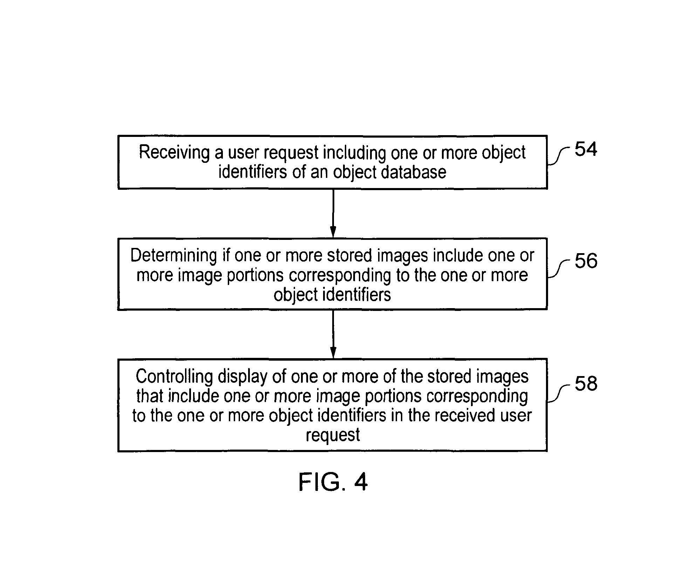

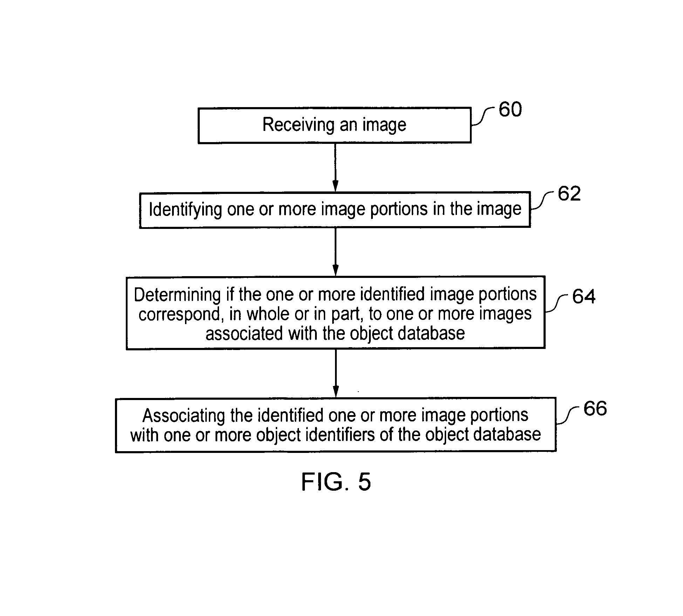

The memory 26 stores a computer program 28 comprising computer program instructions that control the operation of the apparatus 10 when loaded into the processor 24. The computer program instructions 28 provide the logic and routines that enables the apparatus 10 to perform the methods illustrated in Figs. 4 and 5. The processor 24 by reading the memory 26 is able to load and execute the computer program 28.

The computer program 28 may arrive at the apparatus 10 via any suitable delivery mechanism 30. The delivery mechanism 30 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 28. The delivery mechanism 30 may be a signal configured to reliably transfer the computer program 28. The apparatus 10 may propagate or transmit the computer program 28 as a computer data signal.

Although the memory 26 is illustrated as a single component it may be implemented as one or more separate components some or all of which may be integrated/removable and/or may provide permanent/semi-permanent/ dynamic/cached storage.

References to 'computer-readable storage medium', 'computer program product', 'tangibly embodied computer program' and so on, or a 'controller', 'computer', 'processor' and so on, should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code and so on, should be understood to encompass software for a programmable processor or firmware such as, for example, the programmable content of a hardware device whether instructions for a processor, or configuration settings for a fixed-function device, gate array or programmable logic device and so on.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

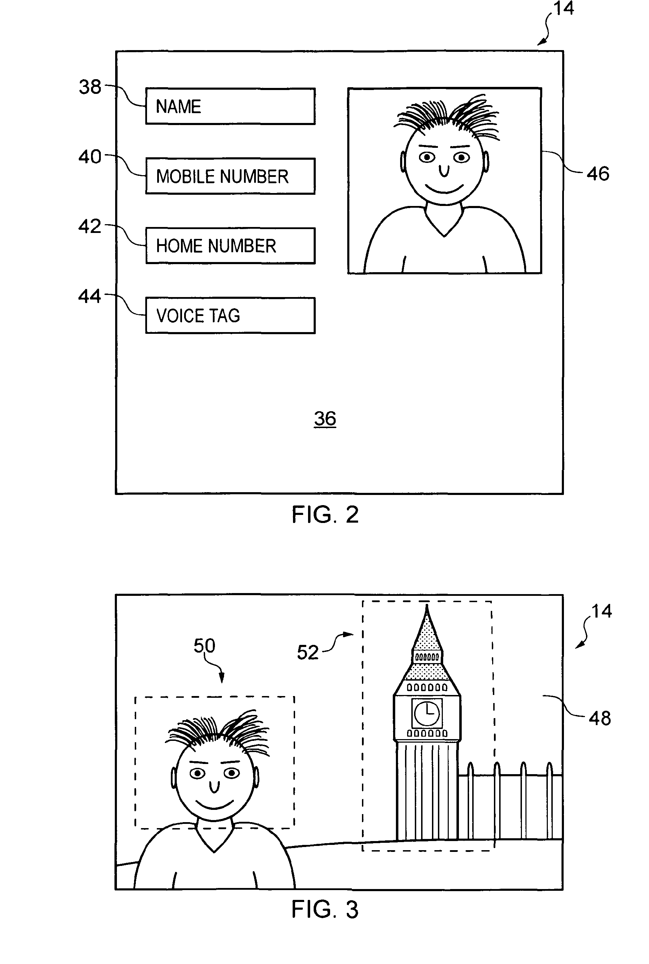

The memory 26 also stores an object database 32 and one or more images 34. The object database 32 may be (for example) a contact database or a landmark database and is described in the following paragraphs with reference to fig. 2. The one or more images 34 include any images of any format and may include video (which may also be in any format).

The display 14 may be any suitable display and may be, for example, an active matrix organic light emitting diode (AMOLED) display, an organic light emitting diode display (OLED), a liquid crystal display (LCD) or a thin film transistor (TFT) display. The processor 24 is configured to control the display 14 to display, for example, a graphical user interface, images and videos.

The user input device 16 may be any suitable user input device and may be, for example, a touch screen display (where the user input device is part of the display 14), a keypad, a keyboard or a joystick. The user input device 16 is configured to be manipulated by a user and to provide an input signal to the controller 12 in response. A user may use the user input device 16 to operate the apparatus 10.

The camera 18 may be any image sensor and may be a charge coupled device (CCD) camera or a complementary metal oxide semiconductor (CMOS) camera. The controller 12 is configured to control the camera 18 to capture an image and the camera 18 is configured to provide the captured image to the controller 12. The controller 12 may then store the captured image in the memory 26 and/or control the display 14 to display the captured image. It should be appreciated that the camera 18 may be configured to capture still images and/or video.

The audio input device 20 may be any suitable transducer for converting acoustic waves into an electric signal. For example, the audio input device 20 may be a microphone in various embodiments. The audio input device 20 is configured to convert received acoustic waves (for example, a user's voice) into an electrical signal and to provide the electrical signal to the controller 12.

The circuitry 22 includes any other circuitry of the apparatus 10. For example, in various embodiments the circuitry 22 includes a loudspeaker, a transceiver and one or more antennas. The controller 12 is configured to provide control signals to the circuitry 20 (for example, to control a loudspeaker to output acoustic waves) and to receive signals from the circuitry 20 (for example, signals received by the one or more antennas).

The object database 32 includes one or more records that comprise information on one or more objects. An object may be any article (such as a landmark, clothing, electronic equipment, furniture and so on) or any living creature (such as a human, a dog, a cat, a rabbit and so on). A record of the object database 32 includes one or more object identifiers that include information that identify the object. For example, where the object database 32 is a contact database, the object identifiers may be referred to as contact identifiers and these include personal information on the user's contacts such as name, address, telephone numbers, e-mail addresses and so on. A record of the object database 32 is associated with an image of the object. The image may be stored in the object database 32 or may be stored in the one or more images 34 and the object database 32 includes a link to the image in the one or more images 34.

In various embodiments, the memory 26 may store a plurality of object databases 32 for a plurality of different objects. For example, the memory 26 may store a contact database, a landmark database and a database of animals.

Fig. 2 illustrates a view of a display 14 displaying a record 36 in the object database 32. The record 36 includes a first object identifier 38, a second object identifier 40, a third object identifier 42, a fourth object identifier 44 and an image 46.

In this embodiment, the object database 32 is a contact database and the first identifier 38 includes a name of a contact, the second identifier 40 includes a mobile telephone number of the contact, the third identifier 42 includes a home telephone number of the contact and the fourth identifier 44 includes a voice tag for the contact (for example, the voice tag may be a user generated sound recording of the contact's name or may be a computer generated audio file of the contact's name). The image 46 is a photograph of the contact and includes the head (including the face) and the upper torso of the contact.

Fig. 3 illustrates a view of the display 14 displaying an image 48. The image 48 is a photograph that includes an image portion 50 that includes the contact whose details are in the record illustrated in fig. 2. The image 48 also includes another image portion 52 that includes the Palace of Westminster (which is sometimes also referred to as 'Big Ben') which is a landmark in London, England.

The operation of the apparatus 10 is described in the following paragraphs with reference to figs. 2, 3, 4 and 5.

At block 54, the method includes receiving a user request, including one or more object identifiers of the object database 32, for images and/or videos of the plurality of images 34. In various embodiments, the user may operate the user input device 16 to generate the request. For example, where the user input device 16 includes a keypad or a keyboard, the user may type the name of a contact and the user input device 16 then provides the contact name to the controller 12. The user may alternatively or additionally speak the name of a contact to the apparatus 10 and the audio input device 20 may convert the acoustic voice waves into an electrical signal and provide the electrical signal to the controller 12.

At block 56, the method includes determining if one or more stored images of the plurality of images 34 include one or more image portions corresponding to the one or more object identifiers that were included in the user request received in block 54.

In various embodiments, the controller 12 may compare one or more images associated with the object database 32 (such as the image 46 illustrated in fig. 2) with the one or more stored images 34 to determine a correspondence there between. For example, the controller 12 may receive a user request that includes the name of the contact illustrated in fig. 2 and the controller 12 then compares the stored images 34 with the image 46 of the contact (the image 46 is associated with the contact's record and therefore with the object identifiers for that contact). Using face recognition algorithms, the controller 12 may determine for example that the image portion 50 of the stored image 48 illustrated in fig. 3 corresponds to the image 46.

In other embodiments, some or all of the stored images 34 include at least one image portion that is associated with one or more object identifiers of the object database 32 (the association may be performed according to the method illustrated in fig. 5 for example). The stored images 34 may include the associated contact identifiers or may include a link to the associated contact identifier.

The controller 12 may perform block 56 by determining whether any of the one or more stored images 34 are associated with the one or more contact identifiers in the user request. For example, the image portion 50 illustrated in fig. 3 may be associated with the name 38 and the voice tag 44 of the contact illustrated in fig. 2. The controller 12 may receive a user request that includes the name of the contact illustrated in fig. 2 (which may be text or a voice input) and the controller 12 then analyses the stored images 34 to determine whether any of the stored images 34 are associated with the name of the contact. Since the image 48 includes the image portion 50 which is associated with the name 38 and the voice tag 44 of the contact, the controller 12 determines that the image 48 includes an image portion 50 that corresponds to the object identifiers in the user request.

At block 58, the method includes controlling display of one or more of the stored images 34 that include one or more image portions corresponding to the one or more object identifiers in the received user request. For example, where the received user request includes the name of the contact illustrated in fig. 2, the controller 12 may control the display 14 to display the image 48 and other images (if any) that include the contact. It should be appreciated that at block 58, the stored images 34 may be displayed together as thumbnails or may be displayed sequentially. Furthermore, it should be appreciated that in various embodiments the displayed images include videos that include one or frames that are associated with the object identifiers in the user request.

It should be appreciated that the method described above with reference to fig. 4 may be performed to search for images including any object. In some embodiments, the object database 32 includes records for landmarks and the method may be performed to search for stored images that include a landmark. For example, a user may request images that include the Palace of Westminster in London, England and the apparatus 10 may implement the above method and display the image 48 which includes an image portion 52 of the Palace of Westminster.

Various embodiments of the invention provide an advantage in that they may enable a user to search a large number of images for a desired object using the object database 32 relatively quickly. Since the apparatus 10 is able to sort and display the stored images 34 in response to a relatively simple user request, the apparatus 10 may be relatively simple to use and may be useful for storing a large number of images. Furthermore, embodiments of the invention may enable a user to search for any object (for example, any article (such as a landmark, clothing, electronic equipment, furniture and so on) and/or any living creature (such as a human, a dog, a cat, a rabbit and so on)

Fig. 5 illustrates a flow diagram of a method for associating one or more image portions with one or more object identifiers according to various embodiments of the invention.

At block 60, the method includes receiving an image 48. In various embodiments, the image 48 may be received from the camera 18 or may be received from an external electronic device (for example, the image may be downloaded from the internet).

At block 62, the method includes identifying one or more image portions 50, 52 in the image 48. In various embodiments, the controller 12 may use a face recognition algorithm to identify faces within the image 48. The controller 12 may also be configured to use an algorithm to identify other objects (such as buildings) in the image 48.

At block 64, the method includes determining if the one or more identified image portions 50, 52 correspond, in whole or in part, to one or more images associated with the object database 32. For example, the controller 12 may use a face recognition algorithm to identify that the image portion 50 corresponds to the image 46 of the contact record illustrated in fig. 2.

At block 66, the method includes associating the identified one or more identified image portions 50, 52 with one or more object identifiers of the object database 32. For example, the controller 12 may associate the image portion 50 with the first object identifier 38 and/or the second object identifier 40, and/or the third object identifier 42 and/or the fourth object identifier 44 of the contact record illustrated in fig. 2.

The method illustrated in fig. 5 may be automatically implemented by the controller 12 in response to a user request for an image to be associated with object identifiers of the object database 32. The method may additionally or alternatively be automatically implemented by the controller 12 in response to an image being captured by the camera 18 or downloaded from an external source (such as the Internet).

The method illustrated in fig. 5 provides an advantage in that it enables the apparatus 10 to associate images with object identifiers of the object database 32. Where a record in the object database 32 does not exist for an image portion (for example, the object database 32 does not include a record for a human or building in the image), the apparatus 10 may request a user to input information (via the user input device16 and/or via the audio input device 20) with which the image portion may be associated.

The blocks illustrated in the Figs. 4 and 5 may represent steps in a method and/or sections of code in the computer program 28. The illustration of a particular order to the blocks does not necessarily imply that there is a required or preferred order for the blocks and the order and arrangement of the block may be varied. Furthermore, it may be possible for some blocks to be omitted. For example, block 60 may be omitted from the method of fig. 5 where the method is performed for images already stored in the memory 26.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method comprising:
receiving a user request including one or more object identifiers of an object database;
determining if one or more stored images include one or more image portions corresponding to the one or more object identifiers; and
controlling display of one or more of the stored images that include one or more image portions corresponding to the one or more object identifiers in the received user request.

2. A method as claimed in claim 1, wherein the object database is a contact database and an object identifier includes contact information.

3. A method as claimed in claim 1, wherein the object database is a landmark database and an object identifier includes information relating to a landmark.

4. A method as claimed in any of the preceding claims, wherein determining if one or more stored images include one or more image portions corresponding to the one or more object identifiers, includes comparing one or more images associated with the object database with the one or more stored images to determine a correspondence there between.

5. A method as claimed in any of the preceding claims, further comprising:
receiving an image;
identifying one or more image portions in the image;
determining if the one or more identified image portions correspond, in whole or in part, to one or more images associated with the object database; and
associating the identified one or more image portions with one or more object identifiers of the object database.

6. A method as claimed in claim 5, wherein determining if one or more stored images include one or more image portions corresponding to the one or more object identifiers, includes determining if any of the one or more stored images are associated with the one or more object identifiers in the user request.

7. A method as claimed in any of the preceding claims, wherein the one or more image portions include one or more human faces.

8. A method as claimed in any of the preceding claims, wherein the one or more object identifiers include audio information.

9. A method as claimed in any of the preceding claims, wherein the one or more contact identifiers include text information.

10. A method as claimed in any of the preceding claims, wherein the received user request includes audio information identifying the one or more object identifiers.

11. A method as claimed in any of claims 1 to 9, wherein the received request from the user includes text information identifying the one or more object identifiers.

12. An apparatus comprising:
at least one processor; and
at least one memory including computer program code;
the at least one memory and the computer program code configured to, with the at least one processor, cause the apparatus at least to perform the method as claimed in any of claims 1 to 11.

13. An electronic device comprising the apparatus as claimed in claim 12.

14. A non-transitory computer readable storage medium encoded with instructions that, when performed by a processor, cause performance of the method as claimed in of any of claims 1 to 11.

15. A computer program that, when run on a computer, performs the method as claimed in any of claims 1 to 11.
